# EUROPÄISCHE PATENTANMELDUNG

(11) **EP 4 336 284 A2**
(43) Veröffentlichungstag der Anmeldung: **13.03.2024**
(21) Anmeldenummer: 23190992.0
(22) Anmeldetag: 11.08.2023
(51) Int. Cl.: G05B 19/408

(54) **DATENSCHNITTSTELLENVORRICHTUNG ZUM ÜBERTRAGEN VON WERKZEUGDATEN, FERTIGUNGSSYSTEM UND NUMERISCH GESTEUERTE WERKZEUGMASCHINE**

(30) Priorität: 16.08.2022 DE 102022120660
(71) Anmelder: DECKEL MAHO Pfronten GmbH, 87459 Pfronten (DE)
(72) Erfinder: LOCHBIHLER, Thomas, 6682 Vils (AT)
(74) Vertreter: MERH-IP Matias Erny Reichl Hoffmann Patentanwälte PartG mbB

(57) **Zusammenfassung**

Die Erfindung stellt eine Datenschnittstellenvorrichtung 2 zum Übertragen von Werkzeugdaten an eine Steuervorrichtung 31a, 31b einer numerisch gesteuerten Werkzeugmaschine 3a, 3b bereit, wobei die Datenschnittstellenvorrichtung 2 ein erstes Schnittstellenmodul 21, das zur Datenübertragung mit einer Werkzeugdatenverwaltungsvorrichtung 1 eingerichtet ist, ein zweites Schnittstellenmodul 22, das zur Datenübertragung mit einer Steuervorrichtung 31a, 31b einer numerisch gesteuerten Werkzeugmaschine 3a, 3b eingerichtet ist, und eine Datenverarbeitungseinheit 23 umfasst, wobei die Datenschnittstellenvorrichtung 2 eingerichtet ist, über das erste Schnittstellenmodul 21 Werkzeugdaten eines in numerisch gesteuerten Werkzeugmaschinen 3a, 3b einsetzbaren Werkzeugs von der Werkzeugdatenverwaltungsvorrichtung 1 zu empfangen und diese über das zweite Schnittstellenmodul 22 an die Steuervorrichtung 31a, 31b der Werkzeugmaschine 3a, 3b zu übertragen, wobei sich das zweite Schnittstellenmodul 22 mit einer Vielzahl von Steuervorrichtungen 31a, 31b numerisch gesteuerter Werkzeugmaschinen verbinden lässt, und die Datenverarbeitungseinheit 23 eingerichtet ist, ein Datenformat der über das erste Schnittstellenmodul 21 empfangenen Werkzeugdaten in ein Zieldatenformat umzuwandeln, das von einer jeweiligen, die Werkzeugdaten empfangenden Steuervorrichtung 31a; 31b der Vielzahl von Steuervorrichtungen 31a, 31b auslesbar ist, dergestalt, dass die zur empfangenden Steuervorrichtung 31a; 31b zugehörige Werkzeugmaschine 3a; 3b in Abhängigkeit der von der Steuervorrichtung 31a; 31b empfangenen Werkzeugdaten steuerbar ist.

## Beschreibung

### Technisches Gebiet

Die vorliegende Erfindung betrifft eine Datenschnittstellenvorrichtung zum Übertragen von Werkzeugdaten, ein Fertigungssystem und eine numerisch gesteuerte Werkzeugmaschine.

### Hintergrund der Erfindung

Im Bereich der automatisierten Fertigung kommt der Verwaltung der dabei eingesetzten Werkzeuge eine wesentliche Rolle zu. So kommen im Zuge einer Werkstückbearbeitung an einer Werkzeugmaschine für die einzelnen Bearbeitungsschritte eine Vielzahl von verschiedenen Werkzeugen zum Einsatz, deren Beschaffenheit den jeweiligen Bearbeitungsschritt derart stark beeinflusst, dass es im Hinblick auf eine hohe Bearbeitungsgüte unabdingbar ist, die Beschaffenheit der einzelnen Werkzeuge bei der Werkstückbearbeitung zu berücksichtigen.

Aus dem Stand der Technik sind hierzu numerisch gesteuerte Werkzeugmaschinen bekannt, denen für eine Werkstückbearbeitung Werkzeugdaten bereitgestellt werden, die ein durch die Werkzeugmaschine verwendbares Werkzeug beschreiben, beispielsweise in Form von Unwuchtdaten des Werkzeugs.

Der als Teil der Werkzeugverwaltung zu sehende Werkzeugdatenverwaltung kommt dabei eine wesentliche Rolle im Rahmen der automatisierten Fertigung zu. So können besagte Werkzeugdaten bei der Steuerung der Werkzeugmaschine im Zuge der Werkstückbearbeitung berücksichtigt werden, um so durch ein spezifisches Werkzeug bedingte Bearbeitungsfehler zu kompensieren und so die Bearbeitungsgüte zur erhöhen. Die Werkzeugdaten sind dabei werkzeugspezifisch und unterscheiden sich voneinander nicht nur im Falle unterschiedlicher, sondern auch für baugleiche Werkzeuge. Folglich bedarf jedes einzelne Werkzeug in der Regel eines eigenen Satzes an Werkzeugdaten, der sich zudem über die Lebensdauer des Werkzeugs hinweg stets verändert, zum Beispiel durch Abnutzung und dergleichen.

Die werkzeugspezifischen Werkzeugdaten werden im Vorfeld üblicherweise durch ein Vermessen des Werkzeugs an einem sog. Voreinstellgerät erfasst und der Werkzeugmaschine bereitgestellt

So offenbart die WO 2019/020775 A1 ein System mit einem Voreinstellgerät zum Vermessen von Unwuchten eines Werkzeugs und einer zum Voreinstellgerät zugehörigen numerisch gesteuerten Werkzeugmaschine. Ein Werkzeugdatenspeicher der Werkzeugmaschine ist über eine Datenschnittstelle mit dem Voreinstellgerät verbunden und bekommt Werkzeugdatensätze in Form von Wuchtprotokollen vom Voreinstellgerät übertragen. Besagte Wuchtprotokolle sind dabei durch eine Steuervorrichtung der Werkzeugmaschine im Zuge einer Werkzeugauswahl für einen durchzuführenden Bearbeitungsschritt auswertbar, derart, dass die Steuervorrichtung dazu eingerichtet ist, ein für einen Bearbeitungsschritt vorgesehenes Werkzeug zurückzuweisen, falls dessen durch das jeweilige Wuchtprotokoll beschriebene Wuchtdaten zu schlecht sind und eine vorgesehenen Bearbeitungsgüte dadurch nicht eingehalten werden kann.

Gerade im Bereich der automatisierten Massenfertigung mit einer Vielzahl von numerisch gesteuerten Werkzeugmaschine, an denen jeweils eine Vielzahl von Werkzeugen verwendbar ist, fehlt es allerdings an einer effizienten und maschinenübergreifenden Werkzeugverwaltung, insbesondere im Bereiche der Werkzeugdatenverwaltung, sodass in vielen Fällen Werkzeugdaten sogar noch händisch durch einen Maschinenbediener an jeweiligen Steuervorrichtung der einzelnen Werkzeugmaschinen eingepflegt werden müssen, was sowohl zeitintensiv als auch fehleranfällig sein kann.

### Zusammenfassung

Eine Aufgabe der vorliegenden Erfindung ist es nun, eine Möglichkeit zur effizienten Werkzeugverwaltung für die automatisierte Massenfertigung bereitzustellen.

Zur Lösung dieser Aufgabe wird eine Datenschnittstellenvorrichtung nach Anspruch 1, ein Fertigungssystem nach Anspruch 10 und eine numerisch gesteuerte Werkzeugmaschine nach Anspruch 13 bereitgestellt.

Die jeweiligen abhängigen Ansprüche beziehen sich dabei auf bevorzugte Ausführungsformen, die jeweils für sich genommen oder in Kombination bereitgestellt werden können.

Gemäß eines ersten Aspekts der Erfindung wird eine Datenschnittstellenvorrichtung zum Übertragen von Werkzeugdaten an eine Steuervorrichtung einer numerisch gesteuerten Werkzeugmaschine bereitgestellt. Die Datenschnittstellenvorrichtung umfasst dabei ein erstes Schnittstellenmodul, das zur Datenübertragung mit einer Werkzeugdatenverwaltungsvorrichtung eingerichtet ist, und ein zweites Schnittstellenmodul, das zur Datenübertragung mit einer Steuervorrichtung einer numerisch gesteuerten Werkzeugmaschine eingerichtet ist, wobei die Datenschnittstellenvorrichtung eingerichtet ist, über das erste Schnittstellenmodul Werkzeugdaten eines in numerisch gesteuerten Werkzeugmaschinen einsetzbaren Werkzeugs von der Werkzeugdatenverwaltungsvorrichtung zu empfangen und diese über das zweite Schnittstellenmodul an die Steuervorrichtung der Werkzeugmaschine zu übertragen. Das zweite Schnittstellenmodul lässt sich dabei mit einer Vielzahl von Steuervorrichtungen numerisch gesteuerter Werkzeugmaschinen verbinden, wobei die Datenschnittstellenvorrichtung eine Datenverarbeitungseinheit umfasst, die eingerichtet ist, ein Datenformat der über das erste Schnittstellenmodul empfangenen Werkzeugdaten in ein Zieldatenformat umzuwandeln, das von einer jeweiligen, die Werkzeugdaten empfangenden Steuervorrichtung der Vielzahl von Steuervorrichtungen auslesbar ist, dergestalt, dass die zur empfangenden Steuervorrichtung zugehörige Werkzeugmaschine in Abhängigkeit der von der Steuervorrichtung empfangenen Werkzeugdaten steuerbar ist

Auf diese Weise wird eine Datenschnittstellenvorrichtung bereitgestellt, die eine Verknüpfung einer Vielzahl von Werkzeugmaschinen mit einer Werkzeugdatenverwaltungsvorrichtung gestattet und zwar unabhängig von einem jeweiligen maschinenspezifischen Datenformat So können Steuervorrichtungen unterschiedlichster Hersteller mit der Datenschnittstellenvorrichtung verbunden werden, die als Universalübersetzer für die Werkzeugdaten dient und sicherstellt, dass eine jeweilige Steuervorrichtung Werkzeugdaten in einem durch diese verwendbaren Datenformat übertragen bekommt.

Es bedarf somit keiner Vielzahl von Werkzeugdatenverwaltungsvorrichtungen, die jeweils auf eine bestimmte Art oder Ausführung von Steuervorrichtungen angepasst sind, um diesen Werkzeugdaten bereitstellen zu können, sondern es genügt im Grunde eine Werkzeugdatenverwaltungsvorrichtungen, deren Werkzeugdaten über die erfindungsgemäße Datenschnittstellenvorrichtung übersetzt werden, was sich insbesondere im Bereich der automatisierten Massenfertigung, in der ein Werkzeug beispielsweise an einer Vielzahl unterschiedlicher Werkzeugmaschinen eingesetzt werden kann, von Vorteil erweist. Ebenso kann die Anzahl an Werkzeugdatenverwaltungsvorrichtungen, die zum Beispiel in Form von Voreinstellgeräten bereitgestellt werden, in einer Fertigungshalle im Idealfall auf ein Voreinstellgerät reduziert werden.

Je nach Steuervorrichtung unterscheidet sich, beispielsweise bedingt durch unterschiedliche Ausführungen oder unterschiedliche Herstellet, das verwend- bzw. durch die Steuervorrichtung auslesbare Datenformat der Werkzeugdaten (jeweiliges Zieldatenformat). Werden Werkzeugdaten nicht im Zieldatenformat der jeweiligen Steuervorrichtung übertragen werden diese nicht oder fehlerhaft ausgelesen, was unter anderem zu Fehlermeldungen mit Funktionsverlust oder einer Verschlechterung der Bearbeitungsgüte an der Werkzeugmaschine führen kann.

Die unterschiedlichen Datenformate äußern sich beispielsweise in unterschiedlichen Einheiten einzelner Werkzeugkenngrößen (cm vs. Zoll, Minuten vs. Sekunden, etc.), der Art der Angabe oder aber auch schlichtweg in der Speicherreihenfolge besagter Werkzeugkenngrößen. So erwartet eine erste Steuervorrichtung beispielsweise die Angabe eines Werkzeugradius in cm, wohingegen eine zweite Steuervorrichtung die Angabe in mm erwartet und eine dritte Steuervorrichtung sogar die Angabe eines Werkzeugdurchmessers anstelle eines Werkzeugradius.

Aufwendige und unter Umstände manuell durch einen Maschinenbediener erfolgende Anpassungen der Werkzeugdaten sind damit nicht mehr notwendig, sodass eine jeweilige Steuervorrichtung auf einfache und effiziente Weise durch diese auswertbare Werkzeugdaten übertragen bekommt, die im Anschluss zu Steuerung der Werkzeugmaschine eingesetzt werden können, zum Beispiel im Rahmen einer Werkzeugauswahl für einen Bearbeitungsschritt oder aber zur Prozesssteuerung während einer Verwendung eines durch die Werkzeugdaten beschriebenen Werkzeugs.

Unter der Werkzeugdatenverwaltungsvorrichtung ist dabei jedwede Vorrichtung zur Verwaltung von Werkzeugdaten zu verstehen, die vorzugsweise eine Speichervorrichtung, üblicherweise ein elektronisches Speichermedium umfassend, zum Speichern der zu verwaltenden Werkzeugdaten umfasst und/oder auch eine Datenverarbeitungsvorrichtung, die zur Modifikation von Werkzeugdaten eingerichtet ist, um so beispielsweise an der Werkzeugdatenverwaltungsvorrichtung selbst neue Datensätze mit Werkzeugdaten anzulegen, bestehende zu aktualisieren oder ggfs. zu löschen.

Die Werkzeugdaten eines Werkzeugs beschreiben Eigenschaften desselbigen und enthalten hierfür ein oder mehrere Werkzeugkenngrößen, die das zugehörige physische Werkzeug beschreiben. Bei den Werkzeugkenngrößen kann es sich beispielsweise und nicht beschränkend um geometrische Daten (Radius, Durchmesser), um dynamische Daten (Unwucht, Eigenfrequenzen) oder um historische Daten (Gesamtnutzungsdauer) handeln.

Die Werkzeugdatenverwaltungsvorrichtung kann in unterschiedlichen Ausführungen bereitgestellt werden. Nicht beschränkende Beispiele sind eine Ausführung als eine in einem lokalen Netzwerk zur Datenübertragung bereitgestellte Werkzeugdatenverwaltungsvorrichtung oder eine Ausführung als cloudbasierte Werkzeugdatenverwaltungsvorrichtung, bei der die Datenübertragung mit der Datenschnittstellenvorrichtung über eine Internet-Verbindung erfolgt. Es kann dabei auch lediglich ein Teil der Werkzeugdatenverwaltungsvorrichtung, insbesondere die Speichervorrichtung, cloudbasiert sein. Die Bereitstellung einer cloudbasierten Werkzeugdatenverwaltungsvorrichtung gestattet so beispielsweise einen Einsatzort-übergreifenden Einsatz der Werkzeugdatenverwaltungsvorrichtung.

Nachfolgend werden bevorzugte und vorteilhafte Ausführungsformen der Datenschnittstellenvorrichtung gemäß des ersten Aspekts der Erfindung beschrieben.

In einer bevorzugten Ausführungsform umfasst die Datenschnittstellenvorrichtung eine Speichereinheit, in der Konfigurationsdaten abgespeichert sind, die einer jeden Steuervorrichtung aus der Vielzahl von Steuervorrichtungen ein durch die jeweilige Steuervorrichtung auslesbares Datenformat für Werkzeugdaten aus einer Vielzahl von Datenformaten zuordnet, wobei die Datenverarbeitungseinheit eingerichtet ist, das Zieldatenformat auf Basis der in der Speichereinheit abgespeicherten Konfigurationsdaten auszuwählen.

Die Konfigurationsdaten enthalten somit jeweilige Übersetzungsanweisungen in Form der Zieldatenformaten für die Vielzahl der Steuervorrichtungen, wobei die Datenschnittstellenvorrichtung selbstständig das Zieldatenformat auf Basis der Konfigurationsdaten in Abhängigkeit der die Werkzeugdaten empfangenen Steuervorrichtung auswählt.

Die Konfigurationsdaten können dabei jederzeit um weitere Zieldatenformate erweitert werden, wodurch neue Steuervorrichtungen auf einfache Weise in ein Fertigungssystem eingebunden und durch die Datenschnittstellenvorrichtung angesprochen werden können.

In einer bevorzugten Ausführungsform ist die Datenschnittstellenvorrichtung weiterhin eingerichtet, über das zweite Schnittstellenmodul Werkzeugdaten eines Werkzeugs von der Vielzahl von Steuervorrichtungen zu empfangen und diese über das erste Schnittstellenmodul an die Werkzeugdatenverwaltungsvorrichtung zu übertragen, wobei die Datenverarbeitungseinheit eingerichtet ist, ein Datenformat der über das zweite Schnittstellenmodul empfangenen Werkzeugdaten in ein von der Werkzeugdatenverwaltungsvorrichtung auslesbares Datenformat umzuwandeln.

Auf diese Weise wird die Datenschnittstellenvorrichtung um eine bidirektionale Funktionalität erweitert, im Zuge derer Werkzeugdaten auch an die Werkzeugdatenverwaltungsvorrichtung übertragen werden können, wobei die Datenschnittstellenvorrichtung wiederum als Universalübersetzer fungiert

So können beispielsweise an einer Werkzeugmaschine festgestellte Änderungen am Werkzeug, zum Beispiel ein Verschleißzustand oder eine Gesamtnutzungsdauer, an die als zentrale Verwaltungsstelle fungierende Werkzeugdatenverwaltungsvorrichtung übertragen werden, die so über stets aktualisierte Informationen zum Werkzeug verfügt und diese auch anderen Werkzeugmaschinen bereitstellen kann.

In einer bevorzugten Ausführungsform handelt es sich bei dem durch die Werkzeugdatenverwaltungsvorrichtung verwendeten Datenformat der Werkzeugdaten um ein OPC-UA-Datenformat Insbesondere weist die gesamte Werkzeugdatenverwaltungsvorrichtung eine OPC-UA-Architektur auf.

OPC-UA steht für Open-Platform-Communications-Unified-Architecture und bezeichnet einen Standard für den Datenaustausch als plattformunabhängige, service-orientierte Architektur. Die von OPC definierten grundlegenden Dienste basieren dabei auf abstrakten Methodenbeschreibungen, die protokollunabhängig sind und stellen die Grundlage für die gesamte OPC-UA-Funktionalität bereit Auf diese Weise können die Werkzeugdaten in der Werkzeugdatenverwaltungsvorrichtung plattformunabhängig in dem neutralen OPC-UA-Datenformat verwaltet werden, welches sich besonders gut als Ausgangspunkt zur Übersetzung in steuervorrichtungsspezifische Zieldatenformate durch die Datenschnittstellenvorrichtung eignet.

Vorzugsweise weist auch die Datenschnittstellenvorrichtung eine OPC-UA-Architektur auf, wodurch eine reibungslose und protokollunabhängige Kommunikation zwischen Werkzeugdatenverwaltungsvorrichtung und Datenschnittstellenvorrichtung, insbesondere über das erste Schnittstellenmodul ermöglicht wird. So ist für diese Kommunikationsebene kein separates Kommunikationsprotokoll notwendig, dass beispielsweise ein Serialisierung und Deserialisierung der zu übertragenden Werkzeugdaten beinhalten würde.

In einer bevorzugten Ausführungsform ist das zweite Schnittstellenmodul dazu eingerichtet, für die Datenübertragung mit einer jeweiligen Steuervorrichtung der Vielzahl von Steuervorrichtungen ein von dieser verwendetes Kommunikationsprotokoll aus einer Vielzahl von Kommunikationsprotokollen auszuwählen und für die Datenübertragung zu verwenden.

Üblicherweise findet bei Verwendung eines Kommunikationsprotokolls eine Serialisierung der zu übertragenden Werkzeugdaten statt, die so in einer sequentiellen Form vom Sender (hier der Datenschnittstellenvorrichtung) an den Empfänger (hier einer Steuervorrichtung) übertragen werden, wobei der betreffende Empfänger selbstredend imstande sein muss, das jeweilige Kommunikationsprotokoll zu verwenden. Die mit Hilfe des Kommunikationsprotokolls übertragenen Werkzeugdaten werden nach Empfang durch die Steuervorrichtung deserialisiert und stehen letztlich der Steuervorrichtung zur Verwendung bereit.

Als nicht beschränkende Beispiele für die Vielzahl der Kommunikationsprotokolle seien ein Transmission Control Protocol (TCP), vorzugsweise mit Binärkodierung, oder ein Simple ObjectAccess Protocol (SOAP) genannt

In einer bevorzugten Ausführungsform ist das erste Schnittstellenmodul eingerichtet, auf in einer Speichervorrichtung der Werkzeugdatenverwaltungsvorrichtung gespeicherte Werkzeugdaten zuzugreifen.

Auf diese Weise kann die Datenschnittstellenvorrichtung im Rahmen einer pull-Funktionalität selbst auf die Werkzeugdaten in der Werkzeugdatenverwaltungsvorrichtung zugreifen.

In einer bevorzugten Ausführungsform ist die Datenschnittstellenvorrichtung dazu eingerichtet, über das erste Schnittstellenmodul in der Speichervorrichtung der Werkzeugdatenverwaltungsvorrichtung Werkzeugdaten eines Werkzeugs abzuspeichern und/oder dort gespeicherte Werkzeugdaten eines Werkzeugs zu ändern und/oder zu löschen.

Auf diese Weise erhält die Datenschnittstellenvorrichtung zudem Berechtigungen zur Modifikation der in der Speichervorrichtung abgespeicherten Werkzeugdaten, sodass eine der Datenschnittstellenvorrichtung von dritter Seite zugegangene Änderung der Werkzeugdaten, zum Beispiel von einer Messvorrichtung einer Werkzeugmaschine, durch die Datenschnittstellenvorrichtung in die Speichervorrichtung der Werkzeugdatenverwaltungsvorrichtung eingepflegt werden kann, um so stets aktuelle Werkzeugdaten für das spezifische Werkzeug bereitstellen zu können.

Üblicherweise geht dem Abspeichern von Werkzeugdaten in der Speichervorrichtung ein Anlegen eines leeren Datenobjekts, in dem anschließend die Werkzeugdaten abgespeichert werden, sofern noch keine Werkzeugdaten zu dem spezifischen Werkzeug in der Speichervorrichtung abgespeichert sind.

So ist die Datenschnittstellenvorrichtung vorzugsweise dazu eingerichtet, über das erste Schnittstellenmodul in der Speichervorrichtung der Werkzeugdatenverwaltungsvorrichtung ein leeres Datenobjekt für ein Werkzeug anzulegen und Werkzeugdaten dieses Werkzeugs im Anschluss daran im leeren Datenobjekt abzuspeichern.

Auf diese Weise kann für jedes neue Werkzeug ein separates Datenobjekt angelegt werden, das im Anschluss mit den zu speichernden Werkzeugdaten befüllt wird.

Bei besagtem Datenobjekt kann es sich dabei um jedwedes Objekt zur strukturierten Speicherung von Daten handeln, so zum Beispiel eine Liste oder ein Array, welches insbesondere als eine separate Datei in der Speichervorrichtung vorliegt

In einer bevorzugten Ausführungsform ist die Datenschnittstellenvorrichtung dazu eingerichtet, über das zweite Schnittstellenmodul eine Werkzeugkennung, über die ein spezifisches Werkzeug identifizierbar ist, von einer Steuervorrichtung der Vielzahl von Steuervorrichtungen zu empfangen, auf Basis der empfangenen Werkzeugkennung über das erste Schnittstellenmodul auf zum spezifischen Werkzeug zugehörige, in der Speichervorrichtung der Werkzeugdatenverwaltungsvorrichtung gespeicherte Werkzeugdaten zuzugreifen und diese Werkzeugdaten über das zweite Schnittstellenmodul an die Steuervorrichtung zu übertragen.

Auf diese Weise wird eine pull-Funktionalität ausgehend von der Werkzeugmaschine bzw. deren Steuervorrichtung bereitgestellt, im Zuge derer von dieser Werkzeugdaten für ein spezifisches Werkzeug über die Datenschnittstellenvorrichtung von der Werkzeugdatenverwaltungsvorrichtung angefordert werden können. So ist es nicht notwendig, dass sämtliche Werkzeugdaten in einer Speichereinheit der Steuervorrichtung vorgehalten werden müssen, sondern diese können nach Bedarf angefordert werden, was unter anderem die Speichereinheit entlastet und so auch stets aktualisierte Werkzeugdaten zur Verfügung stehen. Auf diese Weise kann nach oder vor Einlegen eines Werkzeugs in eine Bearbeitungsvorrichtung oder in einen Werkzeugwechsler die zum Werkzeug zugehörigen Werkzeugdaten angefordert werden, um diese der Steuervorrichtung für die Handhabung des eingelegten Werkzeugs bereitzustellen.

Vorzugsweise handelt es sich bei der Werkzeugkennung um eine Werkzeugkennung, die die Steuervorrichtung auf Basis einer am betreffenden Werkzeug angebrachten Identifikationseinheit bereitstellt, bei der er sich beispielsweise um einen Strich- oder QR-Code oder einen RFID-Chip handeln kann, der durch eine Detektionsvorrichtung der Werkzeugmaschine auslesbar ist

In einer bevorzugten Ausführungsform ist die Datenschnittstellenvorrichtung dazu eingerichtet, über das erste Schnittstellenmodul zusammen mit den Werkzeugdaten des Werkzeugs weiterhin eine Maschinenkennung, über die eine spezifische Werkzeugmaschine identifizierbar ist, zu empfangen, wobei das zweite Schnittstellenmodul eingerichtet ist, auf Basis der empfangenen Maschinenkennung einer zur spezifischen Werkzeugmaschine zugehörige Steuervorrichtung auszuwählen und die zusammen mit der Maschinenkennung über das erste Schnittstellenmodul empfangenen Werkzeugdaten an die ausgewählte Steuervorrichtung zu übertragen.

Auf diese Weise wird eine push-Funktionalität ausgehend von der Werkzeugdatenverwaltungsvorrichtung bereitgestellt, im Zuge derer ausgehend von dieser Werkzeugdaten gezielt an eine gewünschte bzw. ausgewählte Werkzeugmaschine übertragen werden können. So können zum Beispiel nach Anlegen neuer Werkzeugdaten an einem Voreinstellgerät der Werkzeugdatenverwaltungsvorrichtung die neuen Werkzeugdaten direkt an eine ausgewählte Werkzeugmaschine übertragen werden, an der das gerade am Voreinstellgerät eingepflegte Werkzeug im Anschluss eingesetzt werden soll.

In einer bevorzugten Ausführungsform ist die Datenschnittstellenvorrichtung dazu eingerichtet, über das zweite Schnittstellenmodul auf eine Speichereinheit einer Steuervorrichtung der Vielzahl von Steuervorrichtungen zuzugreifen und dort Werkzeugdaten eines Werkzeugs abzuspeichern und/oder dort gespeicherte Werkzeugdaten eines Werkzeugs zu ändern und/oder zu löschen.

Üblicherweise geht dem Abspeichern von Werkzeugdaten in der Speichereinheit ein Anlegen eines leeren Datenobjekts voraus, in dem anschließend die Werkzeugdaten abgespeichert werden, sofern noch keine Werkzeugdaten zu dem spezifischen Werkzeug in der Speichereinheit abgespeichert sind.

So ist die Datenschnittstellenvorrichtung vorzugsweise dazu eingerichtet, über das zweite Schnittstellenmodul in der Speichereinheit der Steuervorrichtung ein leeres Datenobjekt für ein Werkzeug anzulegen und Werkzeugdaten dieses Werkzeugs im Anschluss daran im leeren Datenobjekt abzuspeichern.

Auf diese Weise kann für jedes neue Werkzeug ein separates Datenobjekt angelegt werden, das im Anschluss mit den zu speichernden Werkzeugdaten befüllt wird.

Auf diese Weise erhält die Datenschnittstellenvorrichtung zudem Berechtigungen zur Modifikation von in der Speichereinheit abgespeicherten Werkzeugdaten, sodass es keiner weiteren Bestätigung oder dergleichen auf Seiten der Steuervorrichtung Bedarf, zum Beispiel durch einen Maschinenbediener, was wiederum die push-Funktionalität ausgehend von der Werkzeugdatenverwaltungsvorrichtung verbessert.

In einer bevorzugten Ausführungsform beinhalten die Werkzeugdaten eines Werkzeugs eine oder mehrere der folgenden Werkzeugkenngrößen:
- eine dynamische und/oder statische Unwucht des Werkzeugs;
- einen Durchmesser und/oder Radius des Werkzeugs;
- eine Länge des Werkzeugs;
- ein Gewicht des Werkzeugs;
- eine gesamte Nutzungsdauer des Werkzeugs; und
- einen Verschleißgrad des Werkzeugs.

Auf diese Weise werden die einen Bearbeitungsschritt beeinflussende Werkzeugkenngrößen bereitgestellt, die bei der Steuerung der Werkzeugmaschine berücksichtigt werden können, wodurch wiederum die Bearbeitungsgüte verbessert werden kann.

Vorzugsweise beinhalten die Werkzeugdaten eines Werkzeugs dabei zumindest:
- eine dynamische oder statische Unwucht des Werkzeugs;
- einen Durchmesser oder Radius des Werkzeugs; und
- eine Länge des Werkzeugs.

Besonders bevorzugt beinhalten die Werkzeugdaten alle der vorstehend genannten Werkzeugkenngrößen.

In einer bevorzugten Ausführungsform ist die Datenschnittstellenvorrichtung ganz oder teilweise cloudbasiert.

So können einzelne oder alle Komponenten der Datenschnittstellenvorrichtung cloudbasiert sein, also nicht als Teil lokaler Hardware-Komponenten, sondern als Teil einer über ein Netzwerkverbindung, insbesondere über das Internet, gekoppelten Cloudcomputing-Vorrichtung ausgeführt sind.

Die Datenschnittstellenvorrichtung kann aber auch ganz oder teilweise als Teil eines lokalen Datennetzwerks (Intranet) ausgeführt sein. Damit wäre diese weitestgehend unabhängig von externen Datenverbindungen.

Gemäß eines zweiten Aspekts der Erfindung wird ein Fertigungssystem bereitgestellt, welches eine Vielzahl numerisch gesteuerter Werkzeugmaschinen, die jeweils eine zum Steuern der Werkzeugmaschine eingerichtete Steuervorrichtung umfassen, eine Werkzeugdatenverwaltungsvorrichtung zur Verwaltung von Werkzeugdaten von in numerisch gesteuerten Werkzeugmaschinen einsetzbaren Werkzeugen und eine Datenschnittstellenvorrichtung gemäß des ersten Aspekts der Erfindung, deren erstes Schnittstellenmodul datenübertragend mit der Werkzeugdatenverwaltungsvorrichtung verbunden ist und deren zweites Schnittstellenmodul datenübertragend mit jeder Steuervorrichtung der Vielzahl numerisch gesteuerter Werkzeugmaschinen verbunden ist, umfasst.

Auf diese Weise wird ein Fertigungssystem, bereitgestellt, welches die vorstehend beschriebene erfindungsgemäße Datenschnittstellenvorrichtung umfasst und damit deren bereits beschriebenen Vorteile in das Fertigungssystem einbringt

Die Datenschnittstellenvorrichtung des Fertigungssystems gestattet dabei die Verknüpfung der Vielzahl von Werkzeugmaschinen mit der zumindest einen Werkzeugdatenverwaltungsvorrichtung und zwar unabhängig von einem jeweiligen maschinenspezifischen Datenformat. So kann ein Fertigungssystem bereitgestellt werden, in dem Steuervorrichtungen unterschiedlichster Hersteller zum Einsatz kommen und über die Datenschnittstellenvorrichtung verbunden werden, die als Universalübersetzer für die Werkzeugdaten dient und sicherstellt, dass eine jeweilige Steuervorrichtung Werkzeugdaten in einem durch diese verwendbaren Datenformat (Zieldatenformat) erhält

Nachfolgend werden bevorzugte und vorteilhafte Ausführungsformen des Fertigungssystems gemäß des zweiten Aspekts der Erfindung beschrieben.

In einer bevorzugten Ausführungsform umfasst die Werkzeugdatenverwaltungsvorrichtung ein Voreinstellgerät, das eingerichtet ist, zumindest eine Werkzeugkenngröße eines in das Voreinstellgerät eingelegten Werkzeugs zu erfassen und darauf basierend Werkzeugdaten des eingelegten Werkzeugs zu erstellen.

Das Fertigungssystem bietet damit die Möglichkeit, Werkzeugdaten neuer Werkzeuge auf Basis der am realen, physischen Werkzeug erfassten Werkzeugkenngröße anzulegen und/oder bestehende Werkzeugdaten zu aktualisieren.

In einer bevorzugten Ausführungsform ist das Voreinstellgerät eingerichtet, die erstellten Werkzeugdaten des eingelegten Werkzeugs an die Datenschnittstellenvorrichtung zu senden und/oder in einer Speichervorrichtung der Werkzeugdatenverwaltungsvorrichtung abzuspeichern und/oder dort bereits gespeicherte Werkzeugdaten des eingelegten Werkzeugs auf Basis der erstellten Werkzeugdaten zu ändern.

Auf diese Weise können aus der erfassten Werkzeugkenngröße erstellte Werkzeugdaten zur zentralen Verwaltung in der Speichervorrichtung abgespeichert oder geändert werden oder direkt an die Datenschnittstellenvorrichtung übermittelt werden, insbesondere zur weiteren Übertragung an einer Steuervorrichtung. Dadurch wird eine push-Funktionalität ausgehend vom Voreinstellgerät bereitgestellt, im Zuge derer ausgehend von diesem Werkzeugdaten an beliebige Empfänger übertragen werden können.

In einer bevorzugten Ausführungsform umfasst zumindest eine Werkzeugmaschine der Vielzahl von Werkzeugmaschinen ein Werkzeugmagazin mit einer Vielzahl von Magazinplätzen zur jeweiligen Aufnahme eines Werkzeugs und eine Werkzeugwechselvorrichtung, die zum Ein- und Auswechseln von Werkzeugen an den Magazinplätzen des Werkzeugmagazins eingerichtet ist, wobei die Steuervorrichtung der zumindest einen Werkzeugmaschine eingerichtet ist, auf Basis der Steuervorrichtung bereitgestellter Werkzeugdaten eines von der Werkzeugwechselvorrichtung gehandhabten Werkzeugs einen nicht belegten Magazinplatz aus einer Menge von nicht belegten Magazinplätzen des Werkzeugmagazins auszuwählen und die Werkzeugmaschine derart anzusteuern, dass das gehandhabte Werkzeug durch die Werkzeugwechselvorrichtung in den ausgewählten nicht belegten Magazinplatz des Werkzeugmagazins eingesetzt wird.

Auf diese Weise wird eine verbesserte Handhabung der Werkzeuge an der Werkzeugmaschine abseits des Einsatzes bei Bearbeitungen im Arbeitsraum bereitgestellt, die eine gezielte Ablage der Werkzeuge in einem dafür am besten geeigneten Magazinplatz auf Basis der Werkzeugdaten erlaubt.

Die Werkzeuge unterscheiden sich üblicherweise in Form und Größe, sodass es beispielsweise erforderlich sein kann, bei besonders großen Werkzeugen benachbarte Magazinplätze frei zu lassen, da es andernfalls zur Kollision mit darin befindlichen Werkzeugen kommen würde. Die Auswahl der jeweiligen Magazinplätze erfolgte aufgrund dieser Problematik jeher manuell durch einen Maschinenbediener, der in Kenntnis der Werkzeugdimensionen einen passenden Magazinplatz auswählt.

Durch die in Abhängigkeit der Werkzeugdaten erfolgende Auswahl des Magazinplatzes, können derartige Vorgänge automatisiert werden und die Werkzeugmaschine ist im Stande, selbstständig einen für das Werkzeug geeigneten Magazinplatz auszuwählen und das Werkzeug mittels der Werkzeugwechselvorrichtung auch direkt in diesen einzusetzen.

Die Auswahl des Magazinplatzes kann dabei auf Basis geometrischer Werkzeugkenngrößen aber auch auf Basis anderweitiger Werkzeugkenngrößen erfolgen. So können die Werkzeuge automatisch in für eine bestimmte Bearbeitungskategorie vorgesehene Magazinplätze eingesetzt werden, beispielsweise alle Fräsköpfe in einem ersten Abschnitt des Werkzeugmagazins, alle Bohrer in einem zweiten Abschnitt usw.

In einer bevorzugten Ausführungsform beinhalten die der Steuervorrichtung der zumindest einen Werkzeugmaschine bereitgestellten Werkzeugdaten des von der Werkzeugwechselvorrichtung gehandhabten Werkzeugs zumindest eine geometrische Abmessung des Werkzeugs, auf Basis derer die Steuervorrichtung den nicht belegten Magazinplatz auswählt.

Gemäß eines dritten Aspekts der Erfindung wird eine numerisch gesteuerte Werkzeugmaschine, umfassend ein Werkzeugmagazin, das eine Vielzahl von Magazinplätzen zur jeweiligen Aufnahme eines Werkzeugs umfasst, eine Werkzeugwechselvorrichtung, die zum Ein- und Auswechseln von Werkzeugen an den Magazinplätzen des Werkzeugmagazins eingerichtet ist, und eine Steuervorrichtung, die zum Steuern der Werkzeugmaschine eingerichtet ist, bereitgestellt, wobei die Steuervorrichtung eingerichtet ist, auf Basis der Steuervorrichtung bereitgestellter Werkzeugdaten eines von der Werkzeugwechselvorrichtung gehandhabten Werkzeugs, die zumindest eine geometrische Abmessung des gehandhabten Werkzeugs umfassen, für das gehandhabte Werkzeug einen nicht belegten Magazinplatz aus einer Menge von nicht belegten Magazinplätzen des Werkzeugmagazins auszuwählen und die Werkzeugmaschine derart anzusteuern, dass das gehandhabte Werkzeug durch die Werkzeugwechselvorrichtung in den ausgewählten nicht belegten Magazinplatz des Werkzeugmagazins eingesetzt wird.

Auf diese Weise wird eine Werkzeugmaschine mit Werkzeugmagazin bereitgesellt, die eine verbesserte Handhabung der Werkzeuge an der Werkzeugmaschine abseits des Einsatzes bei Bearbeitungen im Arbeitsraum erlaubt und eine gezielte Ablage der Werkzeuge in einem dafür am besten geeigneten Magazinplatz auf Basis von der Steuervorrichtung bereitgestellten Werkzeugdaten des gehandhabten Werkzeugs ermöglicht.

Die Werkzeuge unterscheiden sich üblicherweise in Form und Größe, sodass es beispielsweise erforderlich sein kann, bei besonders großen Werkzeugen benachbarte Magazinplätze frei zu lassen, da es andernfalls zur Kollision mit darin befindlichen Werkzeugen kommen würde. Die Auswahl der jeweiligen Magazinplätze erfolgte aufgrund dieser Problematik jeher manuell durch einen Maschinenbediener, der in Kenntnis der Werkzeugdimensionen einen passenden Magazinplatz auswählt.

Durch die in Abhängigkeit der Werkzeugdaten erfolgende Auswahl des Magazinplatzes, können derartige Vorgänge automatisiert werden und die Werkzeugmaschine ist im Stande, selbstständig einen für das Werkzeug geeigneten Magazinplatz auszuwählen und das Werkzeug mittels der Werkzeugwechselvorrichtung auch direkt in diesen einzusetzen.

Nachfolgend werden bevorzugte und vorteilhafte Ausführungsformen der Werkzeugmaschine gemäß des dritten Aspekts der Erfindung beschrieben.

In einer bevorzugten Ausführungsform umfasst die Werkzeugmaschine eine mit der Steuervorrichtung gekoppelte Erfassungsvorrichtung, die eingerichtet ist, zumindest eine geometrische Abmessung eines durch die Werkzeugwechselvorrichtung gehandhabten Werkzeugs zu erfassen und diese der Steuervorrichtung als Werkzeugdaten bereitzustellen, auf Basis derer die Steuervorrichtung den nicht belegten Magazinplatz auswählt.

Auf diese Weise ist die Werkzeugmaschine selbst zum Erfassen von das gehandhabte Werkzeug beschreibenden Werkzeugdaten eingerichtet, auf Basis derer die Auswahl des dazu passenden Magazinplatzes erfolgt

Bei der Erfassungsvorrichtung kann es sich beispielsweise um eine optische Messvorrichtung (laser- oder kamerabasiert) oder eine haptische Messvorrichtung handeln.

In einer bevorzugten Ausführungsform umfasst die Werkzeugmaschine eine mit der Steuervorrichtung gekoppelte Detektionsvorrichtung, die eingerichtet ist, eine Werkzeugkennung, über die ein spezifisches Werkzeug identifizierbar ist, eines durch die Werkzeugwechselvorrichtung gehandhabten Werkzeugs zu erfassen und an die Steuervorrichtung zu übertragen, wobei die Steuervorrichtung eingerichtet ist, auf Basis der empfangenen Werkzeugkennung auf zum gehandhabten Werkzeug zugehörige in einer Speichereinheit der Steuervorrichtung gespeicherte Werkzeugdaten zuzugreifen und diese zur Auswahl des nicht belegten Magazinplatzes zu verwenden.

Auf diese Weise wird die Werkzeugmaschine um eine Identifikationsmöglichkeit erweitert, auf Basis derer das gehandhabte Werkzeug erkannt werden kann und die zu dem Werkzeug passenden Werkzeugdaten aus der Speichereinheit der Steuervorrichtung ausgelesen werden können.

Die Werkzeugkennung kann dabei auf unterschiedliche Weisen erfassbar sein. So kann die Detektionsvorrichtung beispielsweise eingerichtet sein, am Werkzeug angebrachte Werkzeugkennung in Form eines Strich- und/oder eines QR-Codes optisch zu erfassen und/oder diese in Form von auf einem RFID-Chips gespeicherten Daten zu erfassen, mittels eines RFID-Lesegeräts.

In einer bevorzugten Ausführungsform ist die Steuervorrichtung zum Empfangen von Werkzeugdaten eines Werkzeugs mit einer Datenschnittstellenvorrichtung gemäß des ersten Aspekts der Erfindung gekoppelt und eingerichtet, von der Datenschnittstellenvorrichtung empfangene Werkzeugdaten in der Speichereinheit der Steuervorrichtung abzuspeichern.

Auf diese Weise kann die Werkzeugmaschine beispielsweise in ein größeres Fertigungssystem eingebunden werden, in dem die Verwaltung der Werkzeugdaten zentral über eine Werkzeugdatenverwaltungsvorrichtung und die Verteilung über die Datenschnittstellenvorrichtung erfolgt, wodurch nicht alle Werkzeugdaten durchweg in der Speichereinheit abgelegt sein müssen.

In einer bevorzugten Ausführungsform ist das Werkzeugmagazin als Radmagazin ausgeführt, das relativ zu einem Maschinenbett der Werkzeugmaschine zur Ausrichtung eines Magazinplatzes gegenüber der Werkzeugwechselvorrichtung um eine Rotationsachse rotatorisch verfahrbar ist, wobei die Magazinplätze umfangsseitig angeordnet und Entnahmerichtungen der Magazinplätze radial bezüglich der Rotationsachse verlaufen.

Radmagazine bieten eine platzsparende und flexible Speichermöglichkeit für Werkzeuge, die im Zusammenspiel mit der Werkzeugwechselvorrichtung der Werkzeugmaschine ein schnelles Ein- und Auswechseln eines Werkzeugs aus/in einen Magazinplatz gestatten, im Zuge dessen das Radmagazin rotatorisch verfahren wird, insbesondere in Abhängigkeit der bereitgestellten Werkzeugdaten des gehandhabten Werkzeugs, wodurch Wechselzeiten erheblich reduziert werden.

In einer bevorzugten Ausführungsform handelt es sich bei der zumindest einen geometrischen Abmessungen des gehandhabten Werkzeugs um einen äußeren Durchmesser, einen äußeren Radius oder eine Länge des Werkzeugs handelt.

Vorzugsweise beinhalten die Werkzeugdaten eines Werkzeugs ferner eine oder mehrere der folgenden Werkzeugkenngrößen:
- eine dynamische und/oder statische Unwucht des Werkzeugs;
- ein Gewicht des Werkzeugs;
- eine gesamte Nutzungsdauer des Werkzeugs; und
- einen Verschleißgrad des Werkzeugs.

Gemäß eines vierten Aspekts der Erfindung wird ein Verfahren zum Übertragen von Werkzeugdaten an eine Steuervorrichtung einer numerisch gesteuerten Werkzeugmaschine unter Verwendung einer Datenschnittstellenvorrichtung, insbesondere einer Datenschnittstellenvorrichtung gemäß des ersten Aspekts der Erfindung, bereitgestellt. Das Verfahren umfasst dabei ein Empfangen von Werkzeugdaten eines in numerisch gesteuerten Werkzeugmaschinen einsetzbaren Werkzeugs von einer Werkzeugdatenverwaltungsvorrichtung durch die Datenschnittstellenvorrichtung, ein Auswählen einer die Werkzeugdaten zu empfangenden Steuervorrichtung einer Werkzeugmaschine aus einer Vielzahl von mit der Datenschnittstellenvorrichtung verbundenen Steuervorrichtungen, ein Umwandeln der empfangenen Werkzeugdaten in ein Zieldatenformat durch die Datenschnittstellenvorrichtung und ein Übertragen der umgewandelten Werkzeugdaten an die ausgewählte Steuervorrichtung durch die Datenschnittstellenvorrichtung, wobei das Umwandeln ein Auswählen des Zieldatenformats umfasst, wobei das ausgewählte Zieldatenformat von der ausgewählten, die zu übertragenden Werkzeugdaten empfangenden Steuervorrichtung auslesbar ist, dergestalt, dass die zur ausgewählten Steuervorrichtung zugehörige Werkzeugmaschine in Abhängigkeit der von der ausgewählten Steuervorrichtung empfangenen Werkzeugdaten steuerbar ist

Das Verfahren bietet somit eine Möglichkeit, Werkzeugdaten an eine Vielzahl von Steuervorrichtungen auf eine besonders einfache Weise zur dortigen Verwendung zu übertragen, wobei die Werkzeugdaten in ein passendes Zieldatenformat aus einer Vielzahl verfügbarer Datenformate umgewandelt werden, um so eine universelle Übersetzung zwischen der Werkzeugdatenverwaltungsvorrichtung und der Vielzahl von Steuervorrichtungen bereitzustellen.

Nachfolgend werden bevorzugte und vorteilhafte Ausführungsformen der Verfahrens gemäß des vierten Aspekts der Erfindung beschrieben, deren jeweilige Vorteile sich im Wesentlichen mit denen der Datenschnittstellenvorrichtung gemäß des ersten Aspekts decken.

Vorzugsweise umfasst das Verfahren ein Bereitstellen von Konfigurationsdaten in einer Speichereinheit der Datenschnittstellenvorrichtung, wobei die Konfigurationsdaten einer jeden Steuervorrichtung aus der Vielzahl von Steuervorrichtungen ein durch die jeweilige Steuervorrichtung auslesbares Datenformat für Werkzeugdaten aus einer Vielzahl von Datenformaten zuordnet, und das Auswählen des Zieldatenformats auf Basis der in der Speichereinheit abgespeicherten Konfigurationsdaten erfolgt.

Vorzugsweise handelt es sich bei den von der Werkzeugdatenverwaltungsvorrichtung empfangenen Werkzeugdaten um Werkzeugdaten in einem OPC-UA-Datenformat

Vorzugsweise umfasst das Verfahren ein Auswählen eines Kommunikationsprotokolls aus einer Vielzahl von Kommunikationsprotokollen durch die Datenschnittstellenvorrichtung unter der Maßgabe, dass das ausgewählte Kommunikationsprotokoll von der ausgewählten Steuervorrichtung verwendbar ist, und wobei das Übertragen der umgewandelten Werkzeugdaten unter Verwendung des ausgewählten Kommunikationsprotokolls erfolgt.

Vorzugsweise umfasst das Übertragen der Werkzeugdaten ein Abspeichern der übertragenen Werkzeugdaten in einer Speichereinheit ausgewählten Steuervorrichtung, oder ein Ändern von in besagter Speichereinheit gespeicherten Werkzeugdaten in Abhängigkeit der übertragenen Werkzeugdaten.

Vorzugsweise umfasst das Verfahren weiterhin ein Empfangen einer Werkzeugkennung durch die Datenschnittstellenvorrichtung, über die ein spezifisches Werkzeug identifizierbar ist, von einer Steuervorrichtung der Vielzahl von Steuervorrichtungen, wobei das Empfangen von Werkzeugdaten von der Werkzeugdatenverwaltungsvorrichtung ferner ein Auswählen der zu empfangenden Werkzeugdaten aus einer Speichervorrichtung der Werkzeugdatenverwaltungsvorrichtung in Abhängigkeit der empfangenen Werkzeugkennung umfasst und das Auswählen der die Werkzeugdaten zu empfangenden Steuervorrichtung ferner ein Auswählen der Steuervorrichtung, die die Werkzeugkennung gesendet hat, umfasst.

Vorzugsweise umfasst das Empfangen der Werkzeugdaten ferner ein Empfangen einer Maschinenkennung, über die eine spezifische Werkzeugmaschine identifizierbar ist, wobei das Auswählen der die Werkzeugdaten zu empfangenden Steuervorrichtung in Abhängigkeit der empfangenen Maschinenkennung erfolgt

Gemäß eines fünften Aspekts der Erfindung wird ein Verfahren zum Einsetzen eines Werkzeugs in ein Werkzeugmagazin einer numerisch gesteuerten Werkzeugmaschine, insbesondere einer Werkzeugmaschine gemäß des dritten Aspekts der Erfindung, bereitgestellt, wobei das Werkzeugmagazin eine Vielzahl von Magazinplätzen zur jeweiligen Aufnahme eines Werkzeugs umfasst. Das Verfahren umfasst dabei ein Handhaben eines Werkzeugs durch eine Werkzeugwechselvorrichtung der Werkzeugmaschine, ein Bereitstellen von Werkzeugdaten des gehandhabten Werkzeugs zur Verwendung an einer Steuervorrichtung der Werkzeugmaschine, die zumindest eine geometrische Abmessung des gehandhabten Werkzeugs umfassen, ein Auswählen eines nicht belegten Magazinplatz aus einer Menge von nicht belegten Magazinplätzen des Werkzeugmagazins auf Basis der bereitgestellten Werkzeugdaten durch die Steuervorrichtung und ein Einsetzen des gehandhabten Werkzeugs in den ausgewählten nicht belegten Magazinplatz des Werkzeugmagazins durch die Werkzeugwechselvorrichtung.

Das Verfahren bietet somit eine Möglichkeit, Werkzeuge an einem Werkzeugmagazin einer Werkzeugmaschine automatisch auf Basis der bereitgestellten Werkzeugdaten zu verwalten, um so unter anderem eine optimale Belegung des Werkzeugmagazins ohne händisches Eingreifen eines Maschinenbedieners zu ermöglichen.

Die Handhabung kann hierbei unter anderem ein Aufnehmen des Werkzeugs aus einer Aufnahme einer Arbeitsspindel der Werkzeugmaschine oder ein Aufnehmen des Werkzeugs von einer an der Werkzeugmaschine positionierten Transportvorrichtung, die zum Anliefern von Werkzeugen an die Werkzeugmaschine eingerichtet ist, umfassen.

Nachfolgend werden bevorzugte und vorteilhafte Ausführungsformen der Verfahrens gemäß des fünften Aspekts der Erfindung beschrieben, deren jeweilige Vorteile sich im Wesentlichen mit denen der numerisch gesteuerten Werkzeugmaschine gemäß des dritten Aspekts decken.

Vorzugsweise umfasst das Bereitstellen der Werkzeugdaten ein Erfassen einer geometrische Abmessung des durch die Werkzeugwechselvorrichtung gehandhabten Werkzeugs und ein Erzeugen von Werkzeugdaten auf Basis der erfassten geometrischen Abmessung.

Vorzugsweise umfasst das Verfahren ein Erfassen einer Werkzeugkennung, über die ein spezifisches Werkzeug identifizierbar ist, des durch die Werkzeugwechselvorrichtung gehandhabten Werkzeugs, wobei das Bereitstellen der Werkzeugdaten ferner ein Abrufen der Werkzeugdaten aus einer Speichereinheit der Steuervorrichtung der Werkzeugmaschine auf Basis der erfassten Werkzeugkennung erfolgt

Vorzugsweise handelt es sich bei der zumindest einen geometrischen Abmessungen des gehandhabten Werkzeugs um einen äußeren Durchmesser, einen äußeren Radius oder eine Länge des Werkzeugs.

Weitere Aspekte und deren Vorteile als auch speziellere Ausführungsbeispiele der zuvor genannten Aspekte und Ausführungsformen werden im Folgenden unter Zuhilfenahme der in den beigefügten Figuren gezeigten Zeichnungen beschrieben.
Fig. 1 zeigt eine schematische Ansicht eines Ausführungsbeispiels des erfindungsgemäßen Fertigungssystems.
Fig. 2 zeigt eine schematische Ansicht eines Ausführungsbeispiels der erfindungsgemäßen Werkzeugmaschine mit Werkzeugmagazin.
Fig. 3 zeigt ein schematisches Ablaufdiagramm eines Ausführungsbeispiels des erfindungsgemäßen Verfahrens zum Übertragen von Werkzeugdaten.
Fig. 4 zeigt ein schematisches Ablaufdiagramm eines Ausführungsbeispiels des erfindungsgemäßen Verfahrens zum Einsetzen eines Werkzeugs.

Es wird hervorgehoben, dass die vorliegende Erfindung in keiner Weise auf die nachfolgend beschriebenen Ausführungsbeispiele und deren Ausführungsmerkmale begrenzt ist. Die Erfindung umfasst weiterhin Modifikationen der genannten Ausführungsbeispiele, insbesondere diejenigen, die aus Modifikationen und/oder Kombinationen einzelner oder mehrerer Merkmale der beschriebenen Ausführungsbeispiele im Rahmen des Schutzumfanges der unabhängigen Ansprüche hervorgehen.

### Ausführliche Figurenbeschreibung

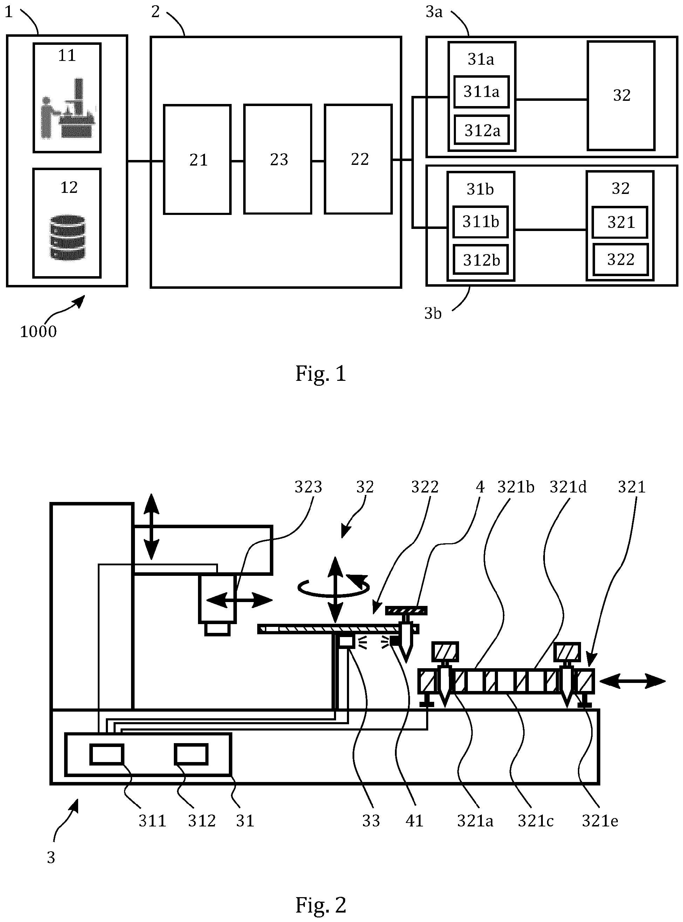

Fig. 1 zeigt eine schematische Ansicht eines Ausführungsbeispiels des erfindungsgemäßen Fertigungssystems 1000, umfassend ein Ausführungsbeispiel der erfindungsgemäßen Datenschnittstellenvorrichtung 2.

Das Fertigungssystem 1000 umfasst eine Vielzahl numerisch gesteuerter Werkzeugmaschinen 3a, 3b, von denen zwei dargestellt sind (erste Werkzeugmaschine 3a, zweite Werkzeugmaschine 3b), eine Werkzeugdatenverwaltungsvorrichtung 1 zur Verwaltung von Werkzeugdaten von in numerisch gesteuerten Werkzeugmaschinen einsetzbaren Werkzeugen und eine Datenschnittstellenvorrichtung 2 zum Übertragen von Werkzeugdaten zwischen der Werkzeugdatenverwaltungsvorrichtung 1 und Steuervorrichtungen 31a, 31b der Werkzeugmaschinen 3a, 3b.

Die jeweiligen Verbindungslinien zwischen den einzelnen Komponenten des Fertigungssystems 1000 repräsentieren Datenverbindungen, die sowohl kabelgebunden als auch kabellos umgesetzt werden können.

Zunächst erfolgt die Beschreibung des im Fertigungssystem 1000 enthaltenen Ausführungsbeispiels der Datenschnittstellenvorrichtung 2.

Die Datenschnittstellenvorrichtung 2 umfasst ein erstes Schnittstellenmodul 21, das zur Datenübertragung mit der Werkzeugdatenverwaltungsvorrichtung 1 eingerichtet ist und ein zweites Schnittstellenmodul 22, das zur Datenübertragung mit den Steuervorrichtungen 31a, 31b der Werkzeugmaschinen 3a, 3b eingerichtet ist.

Die Datenschnittstellenvorrichtung 2 ist dabei eingerichtet ist, über das erste Schnittstellenmodul 21 Werkzeugdaten eines in numerisch gesteuerten Werkzeugmaschinen einsetzbaren Werkzeugs von der Werkzeugdatenverwaltungsvorrichtung 1 zu empfangen und diese über das zweite Schnittstellenmodul 22 an eine oder beide Steuervorrichtungen 31a, 31b der Werkzeugmaschinen 3a, 3b zu übertragen. Das zweite Schnittstellenmodul 21 ist somit mit der Vielzahl von Steuervorrichtungen 31a, 31b verbindbar.

Ferner umfasst die Datenschnittstellenvorrichtung 2 eine Datenverarbeitungseinheit 23, die eingerichtet ist, ein Datenformat der über das erste Schnittstellenmodul 21 empfangenen Werkzeugdaten in ein Zieldatenformat umzuwandeln, das von einer jeweiligen, die Werkzeugdaten empfangenden Steuervorrichtung 31a; 31b der Vielzahl von Steuervorrichtungen 31a, 31b auslesbar ist, dergestalt, dass die zur empfangenden Steuervorrichtung 31a; 31b zugehörige Werkzeugmaschine 3a; 3b in Abhängigkeit der von der Steuervorrichtung 31a; 31b empfangenen Werkzeugdaten steuerbar ist.

Bei dem Datenformat der vom ersten Schnittstellenmodul 21 empfangenen Werkzeugdaten (und von der Werkzeugdatenverwaltungsvorrichtung 1 verwendete Datenformat) handelt es sich im gezeigten Ausführungsbeispiel um ein OPC-UA-Datenformat, auf Basis dessen die Werkzeugdaten auf Seiten der der Werkzeugdatenverwaltungsvorrichtung 1 plattformunabhängig in dem neutralen OPC-UA-Datenformat verwaltet werden, welches sich besonders gut als Ausgangspunkt zur Übersetzung in die steuervorrichtungsspezifischen Zieldatenformate durch die Datenschnittstellenvorrichtung 2 bzw. durch deren Datenverarbeitungseinheit 23 eignet

Die Steuervorrichtungen 31a, 31b verarbeiten die Werkzeugdaten im gezeigten Ausführungsbeispiel dabei in unterschiedlichen Datenformaten, von denen jeweils das passende durch die Datenschnittstellenvorrichtung 2 als Zieldatenformat im Wege einer Übertragung von Werkzeugdaten ausgewählt wird. Das jeweilige durch die Steuervorrichtungen 31a, 31b verwendbare Datenformat ist in der Regel hersteller- und/oder modellspezifisch. So verwenden beispielsweise Steuervorrichtungen von Siemens ein anderes Datenformat als Steuervorrichtungen von Heidenhain.

Im gezeigten Fertigungssystem 1000 fungiert die Datenschnittstellenvorrichtung 2 besonders vorteilhaft als übersetzende Schnittstelle zwischen der Vielzahl von Werkzeugmaschinen 3a, 3b und der Werkzeugdatenverwaltungsvorrichtung 1 und zwar unabhängig von einem jeweiligen maschinenspezifischen Datenformat So können Steuervorrichtungen unterschiedlichster Hersteller mit der Datenschnittstellenvorrichtung 2 verbunden werden, die als Universalübersetzer für die Werkzeugdaten dient und sicherstellt, dass eine jeweilige Steuervorrichtung Werkzeugdaten in einem durch diese verwend- bzw. auslesbaren Datenformat erhält

Die vorstehend beschriebene Datenschnittstellenvorrichtung 2 ist nicht auf den Einsatz in dem in Fig. 1 gezeigten Fertigungssystem 1000 beschränkt, sondern kann in beliebig gestalteten Fertigungssystemen zum Einsatz kommen.

Nachfolgend erfolgt die Beschreibung der übrigen Komponenten des Fertigungssystems 1000.

Die Werkzeugdatenverwaltungsvorrichtung 1 umfasst ein Voreinstellgerät 11 und ein Speichervorrichtung 12, wobei Letzteres als Datenverwaltungssystem mit einer zusätzlichen Datenveraltungsvorrichtung ausgeführt sein kann.

Das Voreinstellgerät 11 ist eingerichtet, zumindest eine Werkzeugkenngröße eines in das Voreinstellgerät eingelegten Werkzeugs zu erfassen und darauf basierend Werkzeugdaten des eingelegten Werkzeugs zu erstellen, die entweder direkt an die Datenschnittstellenvorrichtung 2 gesendet werden können, oder in der Speichervorrichtung 12 der Werkzeugdatenverwaltungsvorrichtung 1 abgespeichert werden können und bei Bedarf über die Datenschnittstellenvorrichtung 2 an ein oder mehrere Steuervorrichtungen 31a, 31b übermittelt werden. Dies geschieht entweder indem die Datenschnittstellenvorrichtung 2 selbst auf Werkzeugdaten in der Speichervorrichtung 12 zugreift, oder die Werkzeugdatenverwaltungsvorrichtung 1 diese an die Datenschnittstellenvorrichtung 2 übermittelt.

Auf diese Weise können aus der erfassten Werkzeugkenngröße erstellte Werkzeugdaten zur zentralen Verwaltung in der Speichervorrichtung 12 abgespeichert oder geändert werden oder direkt an die Datenschnittstellenvorrichtung 2 übermittelt werden, insbesondere zur weiteren Übertragung an einer Steuervorrichtung 31a, 31b. Dadurch wird eine push-Funktionalität ausgehend vom Voreinstellgerät 11 bereitgestellt, im Zuge derer von diesem Werkzeugdaten an beliebige Empfänger übertragen werden können.

Die Speichervorrichtung 12 der Werkzeugdatenveraltungsvorrichtung 1 sowie Teile oder die gesamte Datenschnittstellenvorrichtung 2 können dabei cloudbasiert sein.

Die Steuervorrichtungen 31a, 31b umfassen jeweils eine Speichereinheit 311a, 311b zum Speichern von Werkzeugdaten sowie eine Steuerungseinheit 312a, 312b, die jeweils eingerichtet ist, Aktoren 32 der jeweiligen Werkzeugmaschinen 3a, 3b in Abhängigkeit der im jeweiligen Zieldatenformat empfangenen Werkzeugdaten und/oder in den Speichereinheiten 311a, 311b gespeicherten Werkzeugdaten zu steuern.

Bei besagten Aktoren 32 kann es sich beispielsweise um Positioniervorrichtungen der Werkzeugmaschine, insbesondere um Positioniervorrichtungen zur Umsetzungen von Relativbewegungen zwischen Werkzeug und Werkstück während der Bearbeitung, oder eine werkzeugtragenden Arbeitsspindel, oder um weitere steuerbare Aktoren der Werkzeugmaschine handeln. Die Aktoren umfassen hierbei üblicherweise ein oder mehrere steuerbare Antriebe. Beispielhaft umfasst die zweite Werkzeugmaschine 3b als Aktoren 32 ein Werkzeugmagazin 321 und eine Werkzeugwechselvorrichtung 322.

Das beispielhafte Werkzeugmagazin 321 umfasst eine Vielzahl von Magazinplätzen zur jeweiligen Aufnahme eines Werkzeugs und die Werkzeugwechselvorrichtung 322 ist zum Ein- und Auswechseln von Werkzeugen an den Magazinplätzen des Werkzeugmagazins 321, welches insbesondere als Radmagazin ausgeführt sein kann, eingerichtet

Die Steuervorrichtung 31b bzw. deren Steuereinheit 312b ist dabei vorzugsweise eingerichtet, auf Basis der Steuervorrichtung 31b bereitgestellter Werkzeugdaten (entweder direkt über die Datenschnittstellenvorrichtung 2 empfangen oder in der Speichereinheit 311b abgespeichert) eines von der Werkzeugwechselvorrichtung 322 gehandhabten Werkzeugs für besagtes Werkzeug einen nicht belegten Magazinplatz aus einer Menge von nicht belegten Magazinplätzen des Werkzeugmagazins 321 auszuwählen und die Werkzeugmaschine 3b derart anzusteuern, insbesondere Antriebe des Werkzeugmagazin 321 und/oder der Werkzeugwechselvorrichtung 322, dass das gehandhabte Werkzeug durch die Werkzeugwechselvorrichtung 322 in den ausgewählten nicht belegten Magazinplatz des Werkzeugmagazins 321 eingesetzt wird.

Durch die in Abhängigkeit der Werkzeugdaten erfolgende Auswahl des Magazinplatzes wird ein automatisierter Vorgang bereitgestellt, im Zuge dessen die Werkzeugmaschine 3b im Stande ist, selbstständig und ohne Zutun eines Maschinenbedieners einen für das Werkzeug geeigneten Magazinplatz auszuwählen und das Werkzeug mittels der Werkzeugwechselvorrichtung 322 auch direkt in diesen einzusetzen.

Die Auswahl des Magazinplatzes kann dabei auf Basis geometrischer Werkzeugkenngrößen aber auch auf Basis anderweitiger Werkzeugkenngrößen erfolgen.

Fig. 2 zeigt eine schematische Ansicht eines Ausführungsbeispiels der erfindungsgemäßen Werkzeugmaschine 3 mit Werkzeugmagazin 321.

Die Werkzeugmaschine 3 kann beispielsweise auch in dem in Fig. 1 gezeigten Fertigungssystem eingesetzt werden, sofern diese bzw. deren Steuervorrichtung 31 unter anderem zur Datenübertragung mit der dortigen Datenschnittstellenvorrichtung 2 verbunden wird.

Die Werkzeugmaschine 3 umfasst eine Steuervorrichtung 31 zum Steuern der Werkzeugmaschine 3 bzw. zu Steuerung von Aktoren 32 der Werkzeugmaschine 3, die unter anderem besagtes Werkzeugmagazin 321, welches wiederum eine Vielzahl von Magazinplätzen 321a-e zur jeweiligen Aufnahme eines Werkzeugs umfasst, eine Arbeitsspindel 323 und eine Werkzeugwechselvorrichtung 322, die zum Ein- und Auswechseln von Werkzeugen an den Magazinplätzen 321a-e des Werkzeugmagazins 321 sowie an einer Aufnahme der Arbeitsspindel 323 eingerichtet ist.

Mögliche Verfahrbewegung der Aktoren sind in Fig. 2 durch Pfeile dargestellt. So kann die Arbeitsspindel 323 in vertikaler und horizontaler Richtung verfahren werden, die Werkzeugwechselvorrichtung 322 kann vertikal verfahren und rotiert werden und das Werkzeugmagazin 321 kann horizontal verfahren werden, wobei die Verfahrmöglichkeiten lediglich exemplarisch und nicht beschränkend zu verstehen sind.

Die Steuervorrichtung 31 ist dabei dazu eingerichtet, auf Basis der Steuervorrichtung 31 bereitgestellter Werkzeugdaten (zum Beispiel in einer Speichereinheit 311 der Steuervorrichtung 3) eines von der Werkzeugwechselvorrichtung 322 gehandhabten Werkzeugs 4, die zumindest eine geometrische Abmessung des gehandhabten Werkzeugs 4 umfassen, für das gehandhabte Werkzeug 4 einen nicht belegten Magazinplatz 321c aus einer Menge von nicht belegten Magazinplätzen 321b-d des Werkzeugmagazins 322 auszuwählen und die Werkzeugmaschine 3 bzw. deren Aktoren 32 über die Steuereinheit 312 der Steuervorrichtung 31 derart anzusteuern, dass das gehandhabte Werkzeug 4 durch die Werkzeugwechselvorrichtung 322 in den ausgewählten nicht belegten Magazinplatz 321c des Werkzeugmagazins 321 eingesetzt wird.

Die Werkzeugmaschine 3 gestattet damit eine verbesserte Handhabung des Werkzeugs 4 an der Werkzeugmaschine 3 abseits des Einsatzes bei Bearbeitungen im Arbeitsraum, wobei eine gezielte Ablage des Werkzeugs 4 in einem dafür am besten geeigneten Magazinplatz 321c auf Basis der der Steuervorrichtung bereitgestellten Werkzeugdaten des gehandhabten Werkzeugs 4 ermöglicht wird.

Vorliegend weist das gehandhabte Werkzeug 4 einen derart großen Werkzeugradius auf, dass dieses in benachbarte Magazinplätze hineinragt. Ausgehend von den zugehörigen Werkzeugdaten, welche beispielsweise besagte Informationen über den Werkzeugradius enthalten, wird daher durch die Steuervorrichtung 31 der mittlere Magazinplatz 321c der freien Magazinplätze 321b-d ausgewählt werden, um eine Kollision mit den bereits eingesetzten Werkzeugen in den Magazinplätze 321a, 321e zu vermeiden.

Im Zuge der Bereitstellung der Werkzeugdaten zur Auswahl des Magazinplatzes umfasst die Werkzeugmaschine 3 ferner eine Detektionsvorrichtung 33, die zum Erfassen einer Werkzeugkennung des gehandhabten Werkzeugs 4 eingerichtet ist, über die ein spezifisches Werkzeug identifizierbar ist. Die Detektionsvorrichtung 33 ist dabei im vorliegenden Ausführungsbeispiel eingerichtet, einen am Werkzeug 4 angebrachten RFID-Chip 41 auszulesen, in dem die Werkzeugkennung gespeichert ist. Auf Basis der erfassten Werkzeugkennung ist die Steuervorrichtung 31 nun eingerichtet, auf die zum gehandhabten Werkzeug 4 zugehörigen, in der Speichereinheit 311 der Steuervorrichtung 31 gespeicherten Werkzeugdaten zuzugreifen. Sollten die Werkzeugdaten nicht in der Speichereinheit 311 abgespeichert sein, könnten im Falle einer Kopplung zu einer Werkzeugdatenveraltungsvorrichtung über eine Datenschnittstellenvorrichtung die benötigten Werkzeugdaten des gehandhabten Werkzeugs 4 angefordert und anschließend an die Steuervorrichtung 31 übertragen werden.

Die Werkzeugmaschine 3 ist somit in der Lage, dass gehandhabte Werkzeug 4 eigenständig zu erkennen, die zugehörigen Werkzeugdaten auszuwählen und auf Basis derer einen geeigneten Magazinplatz 321c auszuwählen und letztlich das gehandhabte Werkzeug 4 auch in diesen einzusetzen, ohne jedwedes Zutun eines Maschinenbedieners.

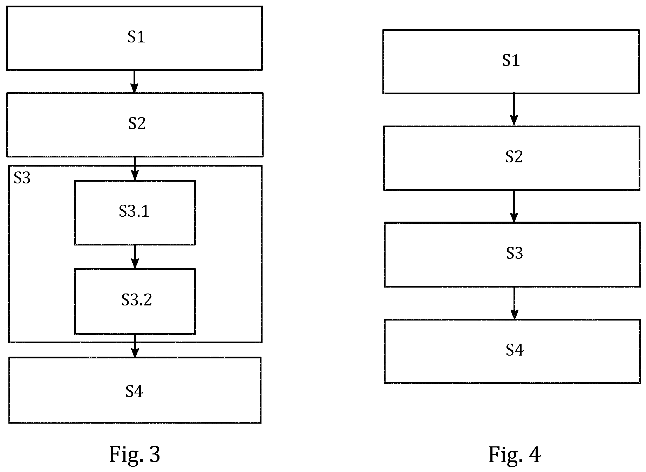

Fig. 3 zeigt ein schematisches Ablaufdiagramm eines Ausführungsbeispiels des erfindungsgemäßen Verfahrens zum Übertragen von Werkzeugdaten an eine Steuervorrichtung einer numerisch gesteuerten Werkzeugmaschine unter Verwendung einer Datenschnittstellenvorrichtung, die als Schnittstelle zwischen der Steuervorrichtung und einer Werkzeugdatenverwaltungsvorrichtung fungiert.

In Schritt S1 erfolgt ein Empfangen von Werkzeugdaten eines in numerisch gesteuerten Werkzeugmaschinen einsetzbaren Werkzeugs von einer Werkzeugdatenverwaltungsvorrichtung durch die Datenschnittstellenvorrichtung.

In Schritt S2 erfolgt ein Auswählen einer die Werkzeugdaten zu empfangenden Steuervorrichtung einer Werkzeugmaschine aus einer Vielzahl von mit der Datenschnittstellenvorrichtung verbundenen Steuervorrichtungen.

In Schritt S3 erfolgt eine ein Umwandeln der empfangenen Werkzeugdaten durch die Datenschnittstellenvorrichtung, umfassend die Teilschritte S3.1 und S3.2.

In Teilschritt S3.1 erfolgt ein Auswählen des Zieldatenformats, wobei das ausgewählte Zieldatenformat von der ausgewählten, die zu übertragenden Werkzeugdaten empfangenden Steuervorrichtung auslesbar ist, dergestalt, dass die zur ausgewählten Steuervorrichtung zugehörige Werkzeugmaschine in Abhängigkeit der von der ausgewählten Steuervorrichtung empfangenen Werkzeugdaten steuerbar ist

In Teilschritt S3.2 erfolgt ein Umwandeln der empfangenden Werkzeugdaten in das ausgewählte Zieldatenformat durch die Datenschnittstellenvorrichtung.

In Schritt S4 erfolgt ein Übertragen der umgewandelten Werkzeugdaten an die ausgewählte Steuervorrichtung durch die Datenschnittstellenvorrichtung.

Fig. 4 zeigt ein schematisches Ablaufdiagramm eines Ausführungsbeispiels des erfindungsgemäßen Verfahrens zum Einsetzen eines Werkzeugs in ein Werkzeugmagazin einer numerisch gesteuerten Werkzeugmaschine mittels einer Werkzeugwechselvorrichtung der Werkzeugmaschine. Das Werkzeugmagazin umfasst dabei eine Vielzahl von Magazinplätzen zur jeweiligen Aufnahme eines Werkzeugs.

In Schritt S1 erfolgt ein Handhaben eines Werkzeugs durch die Werkzeugwechselvorrichtung der Werkzeugmaschine. Die Handhabung kann hierbei exemplarisch ein Aufnehmen des Werkzeugs aus einer Aufnahme einer Arbeitsspindel der Werkzeugmaschine oder ein Aufnehmen des Werkzeugs von einer Transportvorrichtung, die zum Anliefern von Werkzeugen an die Werkzeugmaschine eingerichtet ist, umfassen.

In Schritt S2 erfolgt ein Bereitstellen von Werkzeugdaten des gehandhabten Werkzeugs zur Verwendung durch eine Steuervorrichtung der Werkzeugmaschine, wobei die Werkzeugdaten zumindest eine geometrische Abmessung des gehandhabten Werkzeugs umfassen.

In Schritt S3 erfolgt ein Auswählen eines nicht belegten Magazinplatz für das gehandhabte Werkzeug aus einer Menge von nicht belegten Magazinplätzen des Werkzeugmagazins auf Basis der bereitgestellten Werkzeugdaten durch die Steuervorrichtung.

In Schritt S4 erfolgt ein Einsetzen des gehandhabten Werkzeugs in den ausgewählten nicht belegten Magazinplatz des Werkzeugmagazins durch die Werkzeugwechselvorrichtung.

Vorstehend wurden Ausführungsbeispiele der vorliegenden Erfindung sowie deren Vorteile detailliert unter Bezugnahme auf die beigefügten Figuren beschrieben.

Es wird erneut hervorgehoben, dass die vorliegende Erfindung in keiner Weise auf die vorstehend beschriebenen Ausführungsbeispiele und deren Ausführungsmerkmale begrenzt ist Die Erfindung umfasst weiterhin Modifikationen der genannten Ausführungsbeispiele, insbesondere diejenigen, die aus Modifikationen und/oder Kombinationen einzelner oder mehrerer Merkmale der beschriebenen Ausführungsbeispiele im Rahmen des Schutzumfanges der unabhängigen Ansprüche hervorgehen.

### Liste der Bezugszeichen

- 1: Werkzeugdatenverwaltungsvorrichtung
- 2: Datenschnittstellenvorrichtung
- 3, 3a, 3b: Werkzeugmaschine
- 4: Werkzeug
- 11: Voreinstellgerät
- 12: Speichervorrichtung der Werkzeugdatenverwaltungsvorrichtung
- 21: erstes Schnittstellenmodul
- 22: zweites Schnittstellenmodul
- 23: Datenverarbeitungseinheit
- 31, 31a, 31b: Steuervorrichtung
- 32: Aktoren
- 33: Detektionsvorrichtung
- 41: RFID-Chip
- 311, 311a, 311b: Speichereinheit
- 312, 312a, 312b: Steuereinheit
- 321: Werkzeugmagazin
- 321a-e: Magazinplätze
- 322: Werkzeugwechselvorrichtung
- 323: Arbeitsspindel
- 1000: Fertigungssystem

## Patentansprüche

1. Datenschnittstellenvorrichtung (2) zum Übertragen von Werkzeugdaten an eine Steuervorrichtung (31a, 31b) einer numerisch gesteuerten Werkzeugmaschine (3a, 3b), umfassend:
- ein erstes Schnittstellenmodul (21), das zur Datenübertragung mit einer Werkzeugdatenverwaltungsvorrichtung (1) eingerichtet ist;
- ein zweites Schnittstellenmodul (22), das zur Datenübertragung mit einer Steuervorrichtung (31a, 31b) einer numerisch gesteuerten Werkzeugmaschine (3a, 3b) eingerichtet ist;
wobei die Datenschnittstellenvorrichtung (2) eingerichtet ist, über das erste Schnittstellenmodul (21) Werkzeugdaten eines in numerisch gesteuerten Werkzeugmaschinen einsetzbaren Werkzeugs von der Werkzeugdatenverwaltungsvorrichtung (1) zu empfangen und diese über das zweite Schnittstellenmodul (22) an die Steuervorrichtung (31a, 31b) der Werkzeugmaschine (3a, 3b) zu übertragen;
**dadurch gekennzeichnet, dass**
sich das zweite Schnittstellenmodul (22) mit einer Vielzahl von Steuervorrichtungen (31a, 31b) numerisch gesteuerter Werkzeugmaschinen verbinden lässt, wobei die Datenschnittstellenvorrichtung (2) eine Datenverarbeitungseinheit (23) umfasst, die eingerichtet ist, ein Datenformat der über das erste Schnittstellenmodul (21) empfangenen Werkzeugdaten in ein Zieldatenformat umzuwandeln, das von einer jeweiligen, die Werkzeugdaten empfangenden Steuervorrichtung (31a; 31b) der Vielzahl von Steuervorrichtungen (31a, 31b) auslesbar ist, dergestalt, dass die zur empfangenden Steuervorrichtung (31a; 31b) zugehörige Werkzeugmaschine (3a; 3b) in Abhängigkeit der von der Steuervorrichtung (31a; 31b) empfangenen Werkzeugdaten steuerbar ist

2. Datenschnittstellenvorrichtung (2) nach Anspruch 1, **dadurch gekennzeichnet, dass**
die Datenschnittstellenvorrichtung (2) eine Speichereinheit umfasst, in der Konfigurationsdaten abgespeichert sind, die einer jeden Steuervorrichtung (31a, 31b) aus der Vielzahl von Steuervorrichtungen (31a, 31b) ein durch die jeweilige Steuervorrichtung (31a, 31b) auslesbares Datenformat für Werkzeugdaten aus einer Vielzahl von Datenformaten zuordnet, wobei die Datenverarbeitungseinheit (23) eingerichtet ist, das Zieldatenformat auf Basis der in der Speichereinheit abgespeicherten Konfigurationsdaten auszuwählen.

3. Datenschnittstellenvorrichtung (2) nach einem der vorstehenden Ansprüche, **dadurch gekennzeichnet, dass**
die Datenschnittstellenvorrichtung (2) weiterhin eingerichtet ist, über das zweite Schnittstellenmodul (22) Werkzeugdaten eines Werkzeugs von der Vielzahl von Steuervorrichtungen (31a, 31b) zu empfangen und diese über das erste Schnittstellenmodul (21) an die Werkzeugdatenverwaltungsvorrichtung (1) zu übertragen, wobei die Datenverarbeitungseinheit (23) eingerichtet ist, ein Datenformat der über das zweite Schnittstellenmodul (22) empfangenen Werkzeugdaten in ein von der Werkzeugdatenverwaltungsvorrichtung (1) auslesbares Datenformat umzuwandeln, insbesondere handelt es sich bei dem durch die Werkzeugdatenverwaltungsvorrichtung (1) verwendeten Datenformat der Werkzeugdaten um ein OPC-UA-Datenformat,
und/oder
wobei das zweite Schnittstellenmodul (22) dazu eingerichtet ist, für die Datenübertragung mit einer jeweiligen Steuervorrichtung (31a; 31b) der Vielzahl von Steuervorrichtungen (31a, 31b) ein von dieser verwendetes Kommunikationsprotokoll aus einer Vielzahl von Kommunikationsprotokollen auszuwählen und für die Datenübertragung zu verwenden.

4. Datenschnittstellenvorrichtung (2) nach einem der vorstehenden Ansprüche, **dadurch gekennzeichnet, dass**
das erste Schnittstellenmodul (21) eingerichtet ist, auf in einer Speichervorrichtung (12) der Werkzeugdatenverwaltungsvorrichtung (1) gespeicherte Werkzeugdaten zuzugreifen.

5. Datenschnittstellenvorrichtung (2) nach Anspruch 4, **dadurch gekennzeichnet, dass**
die Datenschnittstellenvorrichtung (2) dazu eingerichtet ist, über das erste Schnittstellenmodul (21) in der Speichervorrichtung (12) der Werkzeugdatenverwaltungsvorrichtung (1) Werkzeugdaten eines Werkzeugs abzuspeichern und/oder dort gespeicherte Werkzeugdaten eines Werkzeugs zu ändern und/oder zu löschen.

6. Datenschnittstellenvorrichtung (2) nach einem der Ansprüche 4 oder 5, **dadurch gekennzeichnet, dass**
die Datenschnittstellenvorrichtung (2) dazu eingerichtet ist, über das zweite Schnittstellenmodul (22) eine Werkzeugkennung, über die ein spezifisches Werkzeug identifizierbar ist, von einer Steuervorrichtung (31a, 31b) der Vielzahl von Steuervorrichtungen (31a, 31b) zu empfangen, auf Basis der empfangenen Werkzeugkennung über das erste Schnittstellenmodul (21) auf zum spezifischen Werkzeug zugehörige, in der Speichervorrichtung (12) der Werkzeugdatenverwaltungsvorrichtung (1) gespeicherte Werkzeugdaten zuzugreifen und diese Werkzeugdaten über das zweite Schnittstellenmodul (22) an die Steuervorrichtung (31a, 31b) zu übertragen.

7. Datenschnittstellenvorrichtung (2) nach einem der vorstehenden Ansprüche, **dadurch gekennzeichnet, dass**
die Datenschnittstellenvorrichtung (2) dazu eingerichtet ist, über das erste Schnittstellenmodul (21) zusammen mit den Werkzeugdaten des Werkzeugs weiterhin eine Maschinenkennung, über die eine spezifische Werkzeugmaschine (3a, 3b) identifizierbar ist, zu empfangen, wobei das zweite Schnittstellenmodul (22) eingerichtet ist, auf Basis der empfangenen Maschinenkennung einer zur spezifischen Werkzeugmaschine (3a, 3b) zugehörige Steuervorrichtung (31a, 31b) auszuwählen und die zusammen mit der Maschinenkennung über das erste Schnittstellenmodul (21) empfangenen Werkzeugdaten an die ausgewählte Steuervorrichtung (31a, 31b) zu übertragen.

8. Datenschnittstellenvorrichtung (2) nach einem der vorstehenden Ansprüche, **dadurch gekennzeichnet, dass**
die Datenschnittstellenvorrichtung (2) dazu eingerichtet ist, über das zweite Schnittstellenmodul (22) auf eine Speichereinheit (311a, 311b) einer Steuervorrichtung (31a, 31b) der Vielzahl von Steuervorrichtungen (31a, 31b) zuzugreifen und dort Werkzeugdaten eines Werkzeugs abzuspeichern und/oder dort gespeicherte Werkzeugdaten eines Werkzeugs zu ändern und/oder zu löschen.

9. Datenschnittstellenvorrichtung (2) nach einem der vorstehenden Ansprüche, **dadurch gekennzeichnet, dass**
die Werkzeugdaten eines Werkzeugs eine oder mehrere der folgenden Werkzeugkenngrößen beinhalten:
- eine dynamische und/oder statische Unwucht des Werkzeugs;
- einen Durchmesser und/oder Radius und/oder eine Länge des Werkzeugs;
- ein Gewicht des Werkzeugs;
- eine gesamte Nutzungsdauer des Werkzeugs; und
- einen Verschleißgrad des Werkzeugs.

10. Fertigungssystem (1000), umfassend:
- eine Vielzahl numerisch gesteuerter Werkzeugmaschinen (3a, 3b), die jeweils eine zum Steuern der Werkzeugmaschine (3a, 3b) eingerichtete Steuervorrichtung (31a, 31b) umfassen;
- eine Werkzeugdatenverwaltungsvorrichtung (1) zur Verwaltung von Werkzeugdaten von in numerisch gesteuerten Werkzeugmaschinen (3a, 3b) einsetzbaren Werkzeugen; und
- eine Datenschnittstellenvorrichtung (2) nach einem der Ansprüche 1 bis 9, deren erstes Schnittstellenmodul (21) datenübertragend mit der Werkzeugdatenverwaltungsvorrichtung (1) verbunden ist und deren zweites Schnittstellenmodul (22) datenübertragend mit jeder Steuervorrichtung (31a, 31b) der Vielzahl numerisch gesteuerter Werkzeugmaschinen (3a, 3b) verbunden ist.

11. Fertigungssystem (1000) nach Anspruch 10, **dadurch gekennzeichnet, dass**
die Werkzeugdatenverwaltungsvorrichtung (1) ein Voreinstellgerät (11) umfasst, das eingerichtet ist, zumindest eine Werkzeugkenngröße eines in das Voreinstellgerät (11) eingelegten Werkzeugs zu erfassen und darauf basierend Werkzeugdaten des eingelegten Werkzeugs zu erstellen, wobei das
das Voreinstellgerät (11) insbesondere eingerichtet ist, die erstellten Werkzeugdaten des eingelegten Werkzeugs an die Datenschnittstellenvorrichtung (2) zu senden und/oder in einer Speichervorrichtung (12) der Werkzeugdatenverwaltungsvorrichtung (1) abzuspeichern und/oder dort bereits gespeicherte Werkzeugdaten des eingelegten Werkzeugs auf Basis der erstellten Werkzeugdaten zu ändern.

12. Fertigungssystem (1000) nach einem der Ansprüche 10 oder 11, **dadurch gekennzeichnet, dass**
zumindest eine Werkzeugmaschine (3b) der Vielzahl von Werkzeugmaschinen (3a, 3b) ein Werkzeugmagazin (321) mit einer Vielzahl von Magazinplätzen zur jeweiligen Aufnahme eines Werkzeugs und eine Werkzeugwechselvorrichtung (322) umfasst, die zum Ein- und Auswechseln von Werkzeugen an den Magazinplätzen des Werkzeugmagazins (321) eingerichtet ist,
wobei die Steuervorrichtung (31b) der zumindest einen Werkzeugmaschine (3b) eingerichtet ist, auf Basis der Steuervorrichtung (31b) bereitgestellter Werkzeugdaten eines von der Werkzeugwechselvorrichtung (322) gehandhabten Werkzeugs (4) einen nicht belegten Magazinplatz aus einer Menge von nicht belegten Magazinplätzen des Werkzeugmagazins (321) auszuwählen und die Werkzeugmaschine (3a, 3b) derart anzusteuern, dass das gehandhabte Werkzeug durch die Werkzeugwechselvorrichtung (322) in den ausgewählten nicht belegten Magazinplatz des Werkzeugmagazins (321) eingesetzt wird,
wobei die der Steuervorrichtung (31a, 31b) der zumindest einen Werkzeugmaschine (3a, 3b) bereitgestellten Werkzeugdaten des von der Werkzeugwechselvorrichtung (322) gehandhabten Werkzeugs (4) insbesondere zumindest eine geometrische Abmessung des Werkzeugs (4) beinhalten, auf Basis derer die Steuervorrichtung (31a, 31b) den nicht belegten Magazinplatz auswählt.

13. Numerisch gesteuerte Werkzeugmaschine (3), umfassend:
- ein Werkzeugmagazin (321), das eine Vielzahl von Magazinplätzen (321a-e) zur jeweiligen Aufnahme eines Werkzeugs umfasst;
- eine Werkzeugwechselvorrichtung (322), die zum Ein- und Auswechseln von Werkzeugen an den Magazinplätzen (321a-e) des Werkzeugmagazins (321) eingerichtet ist; und
- eine Steuervorrichtung (31) zum Steuern der Werkzeugmaschine (3);
**dadurch gekennzeichnet, dass**
die Steuervorrichtung (31) eingerichtet ist, auf Basis der Steuervorrichtung bereitgestellter Werkzeugdaten eines von der Werkzeugwechselvorrichtung (322) gehandhabten Werkzeugs (4), die zumindest eine geometrische Abmessung des gehandhabten Werkzeugs (4), bei der es sich insbesondere um einen äußeren Durchmesser oder einen äußeren Radius oder eine Länge des Werkzeugs (4) handelt, umfassen, für das gehandhabte Werkzeug (4) einen nicht belegten Magazinplatz (321c) aus einer Menge von nicht belegten Magazinplätzen (321b-d) des Werkzeugmagazins (321) auszuwählen und die Werkzeugmaschine (3) derart anzusteuern, dass das gehandhabte Werkzeug (4) durch die Werkzeugwechselvorrichtung (322) in den ausgewählten nicht belegten Magazinplatz (321c) des Werkzeugmagazins (321) eingesetzt wird, wobei das Werkzeugmagazin (321) insbesondere als Radmagazin ausgeführt ist, das relativ zu einem Maschinenbett der Werkzeugmaschine (3) zur Ausrichtung eines Magazinplatzes gegenüber der Werkzeugwechselvorrichtung (322) um eine Rotationsachse rotatorisch verfahrbar ist, die Magazinplätze umfangsseitig angeordnet und Entnahmerichtungen der Magazinplätze radial bezüglich der Rotationsachse verlaufen.

14. Numerisch gesteuerte Werkzeugmaschine (3) nach Anspruch 13, **dadurch gekennzeichnet, dass**
die Werkzeugmaschine (3) eine mit der Steuervorrichtung (31) gekoppelte Erfassungsvorrichtung umfasst, die eingerichtet ist, zumindest eine geometrische Abmessung des durch die Werkzeugwechselvorrichtung (322) gehandhabten Werkzeugs (4) zu erfassen und diese der Steuervorrichtung (31) als Werkzeugdaten bereitzustellen, auf Basis derer die Steuervorrichtung (3) den nicht belegten Magazinplatz (321c) auswählt,
und/oder
wobei die Werkzeugmaschine (3) eine mit der Steuervorrichtung (31) gekoppelte Detektionsvorrichtung (33) umfasst, die eingerichtet ist, eine Werkzeugkennung, über die ein spezifisches Werkzeug identifizierbar ist, des durch die Werkzeugwechselvorrichtung (322) gehandhabten Werkzeugs (4) zu erfassen und an die Steuervorrichtung (31) zu übertragen, wobei die Steuervorrichtung (31) eingerichtet ist, auf Basis der empfangenen Werkzeugkennung auf zum gehandhabten Werkzeug (4) zugehörige in einer Speichereinheit (311) der Steuervorrichtung (31) gespeicherte Werkzeugdaten zuzugreifen und diese zur Auswahl des nicht belegten Magazinplatzes (321c) zu verwenden.

15. Numerisch gesteuerte Werkzeugmaschine (3) nach einem der Ansprüche 13 oder 14, **dadurch gekennzeichnet, dass**
die Steuervorrichtung (31) zum Empfangen von Werkzeugdaten eines Werkzeugs mit einer Datenschnittstellenvorrichtung (2) nach einem der Ansprüche 1 bis 9 gekoppelt ist und eingerichtet ist, von der Datenschnittstellenvorrichtung (2) empfangene Werkzeugdaten in der Speichereinheit (311) der Steuervorrichtung (31) abzuspeichern.
